# EUROPEAN PATENT APPLICATION

(11) **EP 3 893 357 A1**
(43) Date of publication of application: **13.10.2021**
(21) Application number: 18945198.2
(22) Date of filing: 27.12.2018
(51) Int. Cl.: H02J 7/04

(54) **CHARGING METHOD AND APPARATUS, DEVICE TO BE CHARGED, STORAGE MEDIUM, AND CHIP SYSTEM**

(71) Applicant: GUANGDONG OPPO MOBILE TELECOMMUNICATIONS CORP., LTD., Dongguan, Guangdong 523860 (CN)
(72) Inventor: YANG, Jun, Dongguan, Guangdong 523860 (CN); WAN, Shiming, Dongguan, Guangdong 523860 (CN); LIN, Shangbo, Dongguan, Guangdong 523860 (CN)
(74) Representative: Taor, Simon Edward William
(86) International application number: PCT/CN2018/124411
(87) International publication number: WO 2020/133081

(57) **Abstract**

Provided are a charging method and apparatus, a device to be charged, a storage medium, and a chip system. The charging method comprises: after the voltage of a battery and the temperature of the device to be charged satisfy preset conditions, determining that the battery enters a constant current charging stage (S310); detecting the temperature of the device to be charged (S320); when the temperature of the device to be charged is greater than a first threshold, reducing a charging current by ΔI (S330); and charging the device to be charged in the charging current which is reduced by ΔI (S340). In the charging method, when charging the device to be charged, a first threshold is set for the temperature of the device to be charged; after the temperature of the device to be charged is higher than the first threshold, charging is performed by reducing the charging current, thereby avoiding the phenomenon that the temperature of the device to be charged is too high.

## Description

### FIELD OF DISCLOSURE

The present disclosure relates to the field of charging, and more specifically, to a charging method and device, a device to be charged, a storage medium, and a chip system.

### BACKGROUND

At present, a device to be charged (e.g., a smart phone) is more and more popular with consumers. However, the device to be charged consumes a lot of power and needs to be charged frequently.

In order to increase a charging speed, a feasible solution is to use a large current to charge the device to be charged. The larger the charging current, the faster the charging speed. However, a heat generation problem of the device to be charged is also more serious.

Accordingly, it is urgently needed to solve the problem of how to reduce a heat generation of the device to be charged.

### SUMMARY OF DISCLOSURE

The present disclosure provides a charging method and device, a device to be charged, a storage medium, and a chip system, which can control a heat generation of the device to be charged.

In a first aspect, a charging method is provided, including: determining a battery entering a constant current charging stage if a voltage of the battery and a temperature of a device to be charged meet a preset condition; detecting the temperature of the device to be charged; reducing a charging current by ΔI if the temperature of the device to be charged is greater than a first threshold value; and charging the device to be charged with the charging current reduced by ΔI.

In a second aspect, a charging device is provided, including: a communication control circuit and a charging circuit. The communication control circuit is configured to determine a battery entering a constant current charging stage if a voltage of the battery and a temperature meet a preset condition, is configured to detect the temperature of a device to be charged, and is configured to reduce a charging current by ΔI if the temperature of the device to be charged is greater than a first threshold value. The charging circuit is configured to charge the battery with the charging current reduced by ΔI.

In a third aspect, a storage medium is provided, including instructions which, when executed by a processor, cause the processor to perform the method in the first aspect and any one of implementations of the first aspect.

In a fourth aspect, a chip system is provided, including a storage and a processor. The storage is configured to store instructions. The processor is configured to execute the instructions stored in the storage such that a charging device installed with the chip system executes the method in the first aspect and any one of implementations of the first aspect.

In technical solutions of by the present disclosure, when charging the device to be charged, a first threshold value is set for the temperature of the device to be charged. When the temperature of the device to be charged is greater than the first threshold value, the charging current is reduced for charging, which can prevent the temperature of the device to be charged from being too high.

### BRIEF DESCRIPTION OF DRAWINGS

FIG. 1 is a schematic diagram of a wireless charging system.
FIG. 2 is a flowchart of a charging method of an embodiment of the present disclosure.
FIG. 3 is a schematic flowchart of another charging method of another embodiment of the present disclosure.
FIG. 4 is a schematic flowchart of another charging method of the embodiment of the present disclosure.
FIG. 5 is a schematic diagram of a charging device of an embodiment of the present disclosure.
FIG. 6 is a schematic diagram of another wireless charging system of an embodiment of the present disclosure.
FIG. 7 is a schematic diagram of a chip system of an embodiment of the present disclosure.
FIG. 8 is a schematic diagram of another wireless charging system of an embodiment of the present disclosure.
FIG. 9 is a schematic diagram of a device to be charged of an embodiment of the present disclosure.

### DETAILED DESCRIPTION

During a charging process of a device to be charged, a temperature of the device to be charged increases due to a heat generation of each functional module. If the temperature of the device to be charged is too high, it may cause abnormalities in the device to be charged, which will affect a user experience.

At present, charging methods for the device to be charged include wired charging methods and wireless charging methods. The wired charging method can perform by connecting a power supply to the device to be charged through a cable, transmitting an output power of the power supply to the device to be charged through the cable, and charging the device to be charged.

In a process of charging the device to be charged through the wired charging method, an internal charging management circuit of the device to be charged can manage the output power of the power supply, and transmit the output voltage and an output current of the power supply to the battery, thereby charging the battery. During the charging process, the charging management circuit in the device to be charged will generate a lot of heat, which will cause the temperature of the device to be charged to rise, and will affect the user experience.

The wireless charging method can charge the device to be charged based on a wireless charging technology. The wireless charging technology does not need cables to complete power transmission, which can simplify an operation of a charging preparation stage.

A traditional wireless charging technology generally is performed by connecting a power supply (e.g., an adapter) with a wireless charging device (e.g., a wireless charging base), wirelessly (such as electromagnetic waves) transmitting an output power of the power supply to a device to be charged through the wireless charging device, and wirelessly charging the device to be charged.

According to different principles of wireless charging, wireless charging methods are mainly divided into three methods including a magnetic coupling (or an electromagnetic induction), a magnetic resonance, and radio waves. At present, mainstream wireless charging standards include QI standard, power matters alliance (PMA) standard, and alliance for wireless power (A4WP) standard. Both the QI standard and the PMA standard use the magnetic coupling for wireless charging. The A4WP standard uses the magnetic resonance for wireless charging.

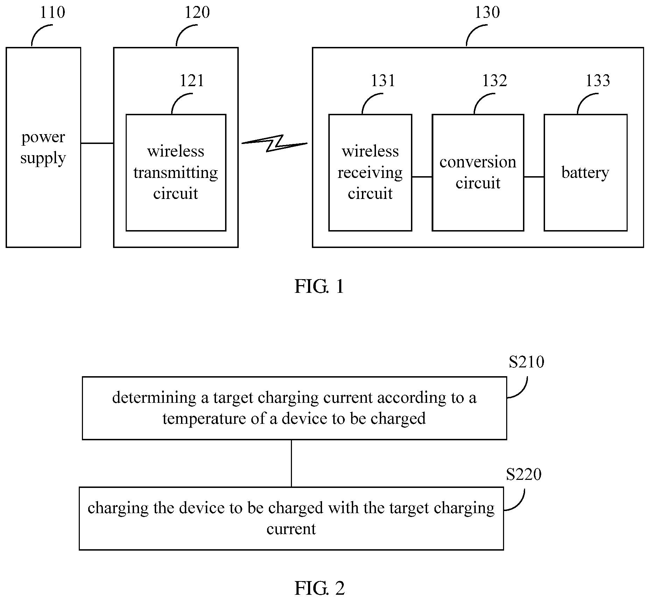

In the following, referring to FIG. 1, a wireless charging method of an embodiment will be introduced.

As shown in FIG. 1, a wireless charging system includes a power supply 110, a wireless charging device 120, and a device to be charged 130. The wireless charging device 120 may be, for example, a wireless charging base. The device to be charged 130 may be, for example, a terminal.

After the power supply 110 is connected to the wireless charging device 120, an output voltage and an output current of the power supply 110 are transmitted to the wireless charging device 120.

The wireless charging device 120 can convert the output voltage and the output current of the power supply 110 into a wireless charging signal (e.g., an electromagnetic signal) through an internal wireless transmitting circuit 121 for transmission. For example, the wireless transmitting circuit 121 may convert the output current of the power supply 110 into alternating current, and then convert the alternating current into the wireless charging signal through a transmitting coil or a transmitting antenna.

The device to be charged includes, but is not limited to, a device that is set to be connected via a wired line (such as, via a public switched telephone network (PSTN), a digital subscriber line (DSL), a digital cable, a direct cable connection, and/or another data connection/network) and/or to receive/transmit communication signals via a wireless interface (such as, for a cellular network, a wireless local area network (WLAN), a digital TV network (e.g., a digital video broadcasting handheld (DVB-H) network), a satellite network, an amplitude modulation-frequency modulation (AM-FM) broadcast transmitter, and/or another communication terminal). A terminal set to communicate through a wireless interface may be referred to as a "wireless communication terminal", a "wireless terminal", and/or a "mobile terminal". Examples of the mobile terminal include, but are not limited to, a satellite or cellular phone, a personal communication system (PCS) terminal that combines a cellular radio phone with data processing, fax, and data communication functions, a personal digital assistant (PDA) including a radio telephone, a pager, an intranet access, a web browser, a notebook, a calendar, and/or a global positioning system (GPS) receiver, a conventional laptop and/or palmtop receiver, and other electronic device including a radio telephone transceiver. In some embodiments, the device to be charged may refer to a mobile terminal device or a handheld terminal device, such as a mobile phone, a pad, and so on. In some embodiments, the device to be charged in the embodiments of the present disclosure may refer to the chip system. In this embodiment, a battery to be charged may or may not belong to the chip system.

The following is described with the wireless charging device and the device to be charged.

The device to be charged 130 may receive a wireless charging signal transmitted by a wireless transmitting circuit 121 through a wireless receiving circuit 131. The wireless charging signal is converted into an output voltage and an output current of the wireless receiving circuit 131. For example, the wireless receiving circuit 131 may convert the wireless charging signal transmitted by the wireless transmitting circuit 121 into alternating current through a receiving coil or a receiving antenna, and perform operations (such as, rectification and/or filtering) on the alternating current to convert the alternating current into the output voltage and the output current of the wireless receiving circuit 131.

In some embodiments, before wirelessly charging, the wireless charging device 120 may pre-negotiate with the device to be charged 130 about a transmitting power of the wireless transmitting circuit 121. Assuming that a negotiated power between the wireless charging device 120 and the device to be charged 130 is 5W, the output voltage and the output current of the wireless receiving circuit 131 are generally 5V and 1A. Assuming that the negotiated power between the wireless charging device 120 and the device to be charged 130 is 10.8W, the output voltage and the output current of the wireless receiving circuit 131 are generally 9V and 1.2A.

If the output voltage of the wireless receiving circuit 131 is not suitable to be directly input to two ends of the battery 133, the output voltage needs to be subjected to a constant voltage and/or constant current control through a conversion circuit 132 in the device to be charged 130, so as to obtain an expected charging voltage and/or charging current of the battery 133 in the device to be charged 130.

The conversion circuit 132 can be configured to convert the output voltage of the wireless receiving circuit 131, so that an output voltage and/or an output current of the conversion circuit 132 meet the expected charging voltage and/or the charging current of the battery 133.

As an example, the conversion circuit 132 may be, for example, a charging integrated circuit (IC), or may be a power management circuit. During the charging process of the battery 133, the conversion circuit 132 can be configured to manage the charging voltage and/or the charging current of the battery 133. The conversion circuit 132 may include a voltage feedback function and/or a current feedback function to realize the management of the charging voltage and/or the charging current of the battery 133.

In some embodiments, the process of charging the battery may include one or more of a trickle charging stage, a constant current charging stage, and a constant voltage charging stage. In the trickle charging stage, the conversion circuit 132 can use the current feedback function to make a current transmitted to the battery 133 in the trickle charging stage meet the expected charging current (e.g., a first charging current) of the battery 133. In the constant current charging stage, the conversion circuit 132 can use the current feedback function to make the current transmitted to the battery 133 in the constant current charging stage meet the expected charging current (e.g., a second charging current, the second charging current may be greater than the first charging current) of the battery 133. In the constant voltage charging stage, the conversion circuit 132 can use the voltage feedback function to make a voltage applied to the two ends of the battery 133 in the constant voltage charging stage meet the expected charging voltage of the battery 133.

As an example, if the output voltage of the wireless receiving circuit 131 is greater than the expected charging voltage of the battery 133, the conversion circuit 132 may be configured to step-down the output voltage of the wireless receiving circuit 131, so that a charging voltage which is subjected to the step-down conversion meets the expected charging voltage of the battery 133. As another example, if the output voltage of the wireless receiving circuit 131 is less than the expected charging voltage of the battery 133, the conversion circuit 132 may be configured to step-up the output voltage of the wireless receiving circuit 131, so that a charging voltage which is subjected to the step-up conversion meets the expected charging voltage of the battery 133.

As another example, the description will be given by taking an example in which the wireless receiving circuit 131 outputs the constant voltage of 5V. When the battery 133 includes a single cell, the conversion circuit 132 (such as, a buck step-down circuit) can step down the output voltage of the wireless receiving circuit 131 to make a stepped-down charging voltage meet the expected charging voltage of the battery 133.

As another example, the description will be given by taking an example in which the wireless receiving circuit 131 outputs the constant voltage of 5V. When the battery 133 includes two or more cells connected in series with each other, the conversion circuit 132 (such as, a boost step-up circuit) can step up the output voltage of the wireless receiving circuit 131 to make a stepped-up charging voltage meet the expected charging voltage of the battery 133.

The conversion circuit 132 is limited by a low power conversion efficiency (also referred to as an energy conversion efficiency, or a circuit conversion efficiency), which causes an unconverted part of an electric energy to be lost in a form of heat. The heat will accumulate on an inside of the device to be charged 130. A design space and a heat dissipation space of the device to be charged 130 are very small (for example, a physical size of a mobile terminal used by users is getting thinner and lighter, and a large number of electronic components are densely arranged in the mobile terminal to improve performance of the mobile terminal), which not only increases a design difficulty of the conversion circuit 132, but also makes it difficult to dissipate the heat accumulated in the device to be charged 130 in time, thereby causing an abnormality of the device to be charged 130.

For example, the heat accumulated on the conversion circuit 132 may cause a thermal interference to electronic components disposed near the conversion circuit 132, thereby causing the electronic components to work abnormally. For another example, the heat accumulated on the conversion circuit 132 may shorten a lifespan of the conversion circuit 132 and the nearby electronic components. For another example, the heat accumulated on the conversion circuit 132 may cause the thermal interference to the battery 133, which may cause abnormal charging and discharging of the battery 133. For another example, the heat accumulated on the conversion circuit 132 may cause the temperature of the device to be charged 130 to increase, which in turn affects a user experience during charging. For another example, the heat accumulated on the conversion circuit 132 may cause a short circuit of the conversion circuit 132 itself, so that the output voltage of the wireless receiving circuit 131 directly applies to the two ends of the battery 133 to cause abnormal charging. If the battery 133 is in an overvoltage charging state for a long time, it may even cause an explosion of the battery 133, thereby endangering a safety of users.

In addition, during the charging process, a transmitting coil of the wireless transmitting circuit and a receiving coil of the wireless receiving circuit will also generate a lot of heat, thereby causing the temperature of the device to be charged to rise.

Therefore, it is urgently needed to solve a problem of how to control the heat generation of the device to be charged.

An embodiment of the present disclosure provides a charging method, which can control the heat generation of the device to be charged during the charging process.

As shown in FIG. 2, the charging method in FIG. 2 includes steps S210 to S220.

In the step S210, a charging current is determined according to a temperature of the device to be charged.

The temperature of the device to be charged can refer to the temperature of the device itself, or it can also refer to a temperature of a battery in the device to be charged.

Alternatively, before determining a target charging current, the temperature of the device to be charged can be detected. The detection of the temperature of the device to be charged can be realized by detecting the temperature of the device to be charged, or it can be realized by detecting the temperature of the battery.

Taking in a constant current charging stage as an example, after the temperature and a voltage of the device to be charged meet a preset condition, it is determined that the battery can enter the constant current charging stage. The temperature of the device to be charged meets the preset condition, which can mean that the temperature of the device to be charged meets the condition for entering the constant current charging stage, for example, the temperature of the device to be charged meets a value ranging from 16°C and 45°C. The voltage of the battery meets the preset condition, which can mean that the voltage of the battery meets the condition for entering the constant current charging stage, for example, the voltage of the battery meets a value ranging from 3.6V and 4.35V.

In the step S220, the device to be charged is charged with the target charging current.

The embodiment of the present disclosure can determine different charging currents according to a current temperature status of the device to be charged. The charging of the device to be charged is adjusted based on the temperature, instead of charging the device to be charged with a basically constant charging current, so the heat generation of the device to be charged can be controlled to a certain extent.

The charging process of the device to be charged can be applied to the constant current charging stage or other charging stages.

Taking the constant current charging stage as an example, when the device to be charged is charged with a constant current, different charging currents can be selected according to the temperature of the device to be charged to perform a constant current charging on the device to be charged.

Before charging the device to be charged with the target charging current, the temperature of the device to be charged and a voltage of the battery can also be detected. After the temperature of the device to be charged and the voltage of the battery meet requirements of a corresponding charging stage, then the charging is performed in the corresponding charging stage.

Taking the constant current charging stage as an example, after the temperature and the voltage of the device to be charged meet the conditions for entering the constant current charging stage, the target charging current is used to perform the constant current charging on the device to be charged. For example, if the voltage of the battery ranges from 3.6V and 4.35V and the temperature of the device to be charged ranges from 16°C and 41°C, the device to be charged can be charged with the constant current.

The above description is only the example of the temperature and the voltage. The conditions for charging the device to be charged with the constant current may also be other conditions.

There are many ways to implement the step 210, and the embodiment of the present disclosure is not specifically limited this.

As an example, different temperature ranges can be set. Also, there is a charging current for each temperature range. Then, according to a current temperature range of the device to be charged, a charging current corresponding to the temperature range can be selected to charge the device to be charged.

For example, before determining the target charging current, a preset range of the temperature of the device to be charged may be determined. The preset range is one preset range of a plurality of preset ranges, and each preset range of the plurality of preset ranges corresponds to a charging current. Temperatures corresponding to the plurality of preset ranges may all be different. That is, there is no intersection in the plurality of preset ranges, or the temperatures corresponding to the plurality of preset ranges do not overlap. After determining the preset range of the temperature of the device to be charged, it can be determined that the target charging current is the charging current corresponding to the preset range.

In the technical solutions of the embodiment of the present disclosure, the plurality of temperature ranges are set, and different charging currents are used in different temperature ranges to charge the device to be charged. This can optimize the charging method and flexibly adjust the charging speed and the temperature of the device to be charged.

Alternatively, the plurality of preset ranges may include a first preset range and a second preset range. A temperature corresponding to the first preset range is less than a temperature corresponding to the second preset range. Moreover, a charging current corresponding to the first preset range is greater than a charging current corresponding to the second preset range.

In other words, if the temperature of the device to be charged is in the first preset range, it is determined that the target charging current is the first charging current. If the temperature of the device to be charged is in the second preset range, it is determined that the target charging current is the second charging current. The temperature corresponding to the first preset range is less than the temperature corresponding to the second preset range, and the first charging current is greater than the second charging current.

In the technical solutions of the embodiment of the present disclosure, if the temperature of the device to be charged is low, a larger charging current is used for charging. This can increase the charging speed and ensure that the device to be charged can be quickly charged. If the temperature of the device to be charged is high, a smaller charging current is used for charging to control the heat generation of the device to be charged. This can reduce the temperature of the device to be charged, thereby improving the user experience.

Generally, the smaller the charging current, the greater the charging power, and the less the heat generated by the device to be charged. Conversely, the greater the charging current, the greater the charging power, and the more heat generated by the device to be charged. Therefore, if the temperature of the device to be charged is high, the charging current can be reduced to reduce the heat generation of the device to be charged, so that the amount of the heat generated by the device to be charged is less than the amount of heat dissipation, thereby reducing the temperature of the device to be charged.

The first preset range and the second preset range mentioned above are only general descriptions. In fact, the embodiment of the present disclosure can provide more than two preset ranges, and provide a plurality of charging currents for the plurality of preset ranges. Each preset range corresponds to one charging current. When charging the device to be charged, according to the preset range of the temperature of the device to be charged, the charging current corresponding to the preset range of the temperature of the device to be charged is used to charge the device to be charged.

Lengths of the plurality of preset ranges can be the same or different. For example, the plurality of preset ranges can be set at equal intervals. For another example, the larger the temperature corresponding to the preset range, the smaller the interval. In other words, if the temperature is low, a span length of the preset range can be set larger. If the temperature is higher, the span length of the preset range can be set smaller.

The plurality of charging currents can be set at equal intervals or set at unequal intervals. For example, a difference of charging currents corresponding to adjacent preset ranges is equal. For another example, the higher the temperature, the greater the difference between the charging currents corresponding to the adjacent preset ranges. That is, if the temperature is low, the difference of the charging currents corresponding to the adjacent temperature range is small. If the temperature is high, the difference of the charging currents corresponding to the adjacent temperature range is large.

A setting method of the temperature preset range and the charging current will be described in more detail below.

Taking the temperature preset ranges being set at equal intervals as an example, the interval of the plurality of preset ranges may be 4°C. In other words, one temperature level is set every 4°C. Alternatively, the charging currents corresponding to the preset ranges may be set at equal intervals. For example, if the temperature ranges from 16°C and 20°C, the charging current can be set to 2.0A. If the temperature ranges from 20°C and 24°C, the charging current can be set to 1.8A. If the temperature ranges from 24°C and 28°C, the charging current can be set to 1.6A. If the temperature ranges from 28°C and 32°C, the charging current can be set to 1.4A. If the temperature ranges from 32°C and 36°C, the charging current can be set to 1.2A. Alternatively, the charging currents corresponding to the preset ranges may be set at unequal intervals. For example, if the temperature ranges from 16°C and 20°C, the charging current can be set to 2.0A. If the temperature ranges from 20°C and 24°C, the charging current can be set to 1.9A. If the temperature ranges from 24°C and 28°C, the charging current can be set to 1.7A. If the temperature ranges from 28°C and 32°C, the charging current can be set to 1.4A. If the temperature ranges from 32°C and 36°C, the charging current can be set to 1.0A.

The higher the temperature, the greater the difference of the charging currents of adjacent preset ranges. In this way, if the temperature is high, the temperature of the device to be charged can be quickly reduced, and the temperature of the device to be charged can be adjusted within a reasonable range in time, so that the temperature of the device to be charged will not be too high, and the user experience can be improved.

Taking the temperature preset ranges being set at unequal intervals as an example, as the temperature increases, the plurality of preset ranges are set more and more densely. Alternatively, the intervals of the temperature preset ranges can be set in an arithmetic sequence. The charging currents corresponding to the preset ranges can be set at equal intervals. For example, the difference of the charging currents corresponding to the adjacent preset ranges is 0.3A. If the temperature ranges from 16°C and 32°C, the charging current can be set to 1.8A. If the temperature ranges from 32°C and 36°C, the charging current can be set to 1.5A. If the temperature ranges from 36°C to 38°C, the charging current can be set to 1.2A. Alternatively, the charging currents corresponding to the preset ranges may be set at unequal intervals. For example, if the temperature ranges from 16°C and 32°C, the charging current can be set to 1.9A. If the temperature ranges from 32°C to 36°C, the charging current can be set to 1.7A. If the temperature ranges from 36°C to 38°C, the charging current can be set to 1.4A. If the temperature ranges from 38°C and 39°C, the charging current can be set to 1.0A.

When the temperature is higher, the temperature ranges can be set to be denser. Moreover, when the temperature is high, the used charging current is quickly reduced, so that the amount of heat generated by the device to be charged can be rapidly reduced. Therefore, the temperature of the device to be charged can be controlled in a reasonable range in a timely and effective manner, and the temperature of the device to be charged will not be too high, which will affect the user experience.

The specific numerical values above are merely examples for ease of understanding, and do not limit the embodiments of the present disclosure. It is understandable that the setting of the temperature range and the setting of the charging current can be a combination of any of the above-described implementation ways.

As another example, a maximum temperature point can be set. If the temperature of the device to be charged exceeds the maximum temperature point, the current is reduced by ΔI per time to charge the device to be charged.

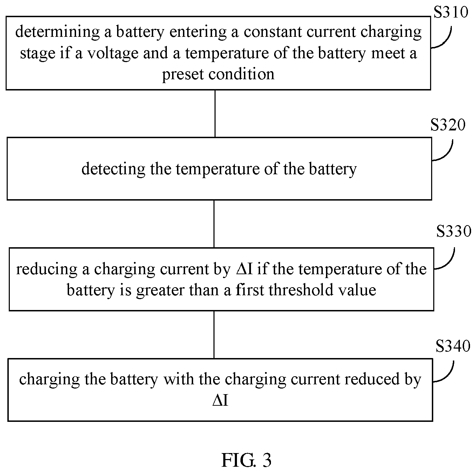

In the following, with reference to FIG. 3, taking the constant current charging stage as an example, a charging method of an embodiment of the present disclosure will be described in detail. As shown in FIG. 3, the charging method may include steps S310 to S340.

In the step S310, if a voltage of a battery and a temperature meet a preset condition, it is determined that the battery enters a constant current charging stage. The battery can be charged with a constant current after the voltage of the battery and the temperature meet the condition for entering the constant current charging stage.

In the step S320, the temperature of the device to be charged is detected. In the detection of the temperature of the device to be charged, the temperature of the device to be charged can be detected directly by a detection circuit. Alternatively, the temperature of the device to be charged can also be detected by the detection circuit, and the temperature of the device to be charged indirectly reflects the temperature of the device to be charged.

In the step S330, if the temperature of the device to be charged is greater than a first threshold value, a charging current is reduced by ΔI. The first threshold value can be a higher temperature point. When the temperature of the device to be charged exceeds the temperature point, it means that t the temperature of the device to be charged may be about to reach a battery temperature limit. If the temperature is higher, it may cause the device to be charged anomaly. For example, the first threshold value can be 41°C. Alternatively, the first threshold value may be 40°C or 45°C. Therefore, after the temperature of the device to be charged exceeds the first threshold value, the charging current is reduced to lower the temperature of the device to be charged.

In the step S340, the battery is charged with the charging current reduced by ΔI.

In the technical solutions of the embodiment of the present disclosure, one first threshold value of the temperature (i.e., a high temperature point) can be preset. If the temperature of the device to be charged exceeds the high temperature point, the charging current is reduced to control the temperature of the device to be charged.

Alternatively, if the temperature of the device to be charged is greater than the first threshold value, reducing the charging current by ΔI can mean that if the temperature of the device to be charged is greater than the first threshold value, the charging current is reduced by ΔI per time t until the temperature of the device to be charged is less than the first threshold value. Alternatively, if the temperature of the device to be charged is greater than the first threshold value, reducing the charging current by ΔI can mean that if the temperature of the device to be charged is greater than the first threshold value, the charging current is reduced by ΔI per time t until the reduced charging current is less than a preset minimum charging current.

For example, assuming the first threshold value is 41°C, and ΔI = 200mA, if the temperature of the device to be charged exceeds 41°C, the charging current is reduced by 200mA. The device to be charged is charged with the charging current reduced by 200mA. If the temperature of the device to be charged is decreased and less than 41°C, the device to be charged is charged with the reduced charging current. If the temperature of the device to be charged continues to rise and exceeds the first threshold value, the charging current continues to decrease by 200mA until the temperature of the device to be charged is less than 41°C.

The embodiment of the present disclosure finds a suitable charging current by gradually reducing the charging current if the temperature exceeds a certain threshold, so that the heat generation and heat dissipation of the device to be charged can be balanced. At this balance point, the temperature of the device to be charged is relatively stable, and the device can also be charged with a maximum charging current when the temperature no longer rises. Therefore, the embodiment of the present disclosure can increase the charging speed and improve the user experience while controlling the temperature of the device to be charged.

During the charging process, it may take a while for the temperature of the device to be charged to respond to the charging current. Thus, after the temperature reaches the first threshold value, the device can be continuously charged for a time t. Then, the temperature of the device to be charged is detected again to determine whether it exactly exceeds the first threshold value. In other words, a current temperature of the device to be charged does not truly represent a result of charging the device to be charged with the charging current. After the temperature exceeds the first threshold value, the device can be continuously charged for a time t, and then the temperature of the device to be charged is detected again. If the temperature of the device to be charged still exceeds the first threshold value, the charging current can be reduced by ΔI. If the temperature of the device to be charged decreases and is less than the first threshold value, the device to be charged can be continuously charged with a current charging current.

Alternatively, a charging time t can be any value ranging from 10 ms and 20 ms. Taking the charging time t of 15 ms and the first threshold value of 41°C as an example, if the temperature of the device to be charged exceeds 41°C during the charging current of 1.6A, the charging current of 1.6A can be continuously applied for 15 ms. If the temperature of the device to be charged continues to rise, the charging current can be reduced by 200mA, and the device to be charged can be charged with a charging current of 1.4A. The device to be charged us charged with the charging current of 1.4A for 15 ms. If the temperature of the device to be charged drops to 40°C, the device to be charged can be charged with the charging current of 1.4A. If the temperature of the device to be charged is still above 41°C, the charging current can continue to be reduced. The device to be charged can be charged with a charging current of 1.2A for 15 ms. The above steps are repeatedly performed until the temperature of the device to be charged is less than 41°C.

If the charging current is too small, the charging speed will be slower. At this time, the charging process can be terminated or enter a next charging stage. For example, it can be switched from the constant current charging stage to the constant voltage charging stage. Alternatively, a preset minimum charging current can be set. For example, the preset minimum charging current may be 500mA. If the charging current drops to less than 500mA, the charging process can be terminated. As an example, if the charging current has been reduced to less than 500 mA, but the temperature of the device to be charged still exceeds the first threshold value, the charging process can also be terminated at this time.

The embodiment of the present disclosure may also set a third threshold value. The third threshold value can be understood as a maximum temperature value. The third threshold value is greater than the first threshold value. If the temperature of the device to be charged exceeds the maximum temperature value, the charging mode is directly exited, or the charging process will terminate. In this case, no matter how large the current charging current is, or what charging stage the device to be charged is in, as long as the temperature of the device to be charged exceeds the maximum temperature value, the charging mode can be directly exited. This can ensure the safety of the device to be charged.

For example, the maximum temperature value can be 45°C. In the process of charging the device to be charged, that is, no matter which stage the device to be charged is in, if the temperature of the device to be charged exceeds 45°C, the charging process is terminated to ensure the safety of device to be charged.

Alternatively, a charging mechanism of the embodiment of the present disclosure may also be a combination of setting the preset range and gradually reducing the charging current for controlling the temperature.

For example, if the temperature of the device to be charged is greater than the first threshold value, before the charging current is reduced by ΔI, the embodiment of the present disclosure may also set a point of a second threshold value. The second threshold value is less than the first threshold value. If the temperature of the device to be charged is less than the second threshold value, the first charging current is used for charging. If the temperature of the device to be charged is greater than the second threshold value and less than the first threshold value, the second charging current is used for charging. The first charging current is greater than the second charging current. The temperature of the device to be charged is less than the second threshold value, which means that the temperature of the device to be charged is less than the second threshold value and greater than the minimum temperature value required to enter the constant current charging stage. In other words, the temperature of the device to be charged may meet the above-mentioned first preset range. A value greater than the second threshold value and less than the first threshold value can also refer to the second preset range described above.

As an embodiment, the embodiment of the present disclosure may set a plurality of temperature points A, B, C, D, and E. The temperature points A, B, C, D, and E increase sequentially, that is, A < B < C < D < E. A temperature range [A, C] sets a charging current a, a temperature range [C, D] sets a charging current b, and a>b. If the temperature exceeds D, the charging current is gradually reduced for charging the device to be charged.

Specifically, before charging the device to be charged, the temperature of the device to be charged can be detected first. If the temperature of the device to be charged is in a range [A, D], the charging mode is entered. Furthermore, the temperature of the device to be charged is determined to be in the range [A, C] or the range [C, D]. If the temperature of the device to be charged is in the range [A, C], the charging current a is used to charge the device to be charged. If the temperature of the device to be charged is in the range [C, D], the charging current b is used to charge the device to be charged. In the process of charging the device to be charged with the charging current a, the temperature of the device to be charged may slowly rise above a temperature C. After the temperature of the device to be charged rises above the temperature C, the charging current is reduced, and the device to be charged is charged with the charging current b. In the process of charging the device to be charged with the charging current b, the temperature of the device to be charged may increase or decrease, or it may remain stable. If the temperature of the device to be charged continues to rise above a temperature D, the device to be charged can be charged by gradually reducing the current. The specific method of gradually reducing the current may refer to the above description. If the temperature of the device to be charged decreases to less than the temperature C, the device to be charged is charged with the charging current a. If the temperature of the device to be charged is relatively stable, the device to be charged can be continuously charged with the charging current b.

In addition, a preset minimum charging current can be set. When the temperature of the device to be charged exceeds the temperature D and the current is gradually reduced, if the charging current decreases to a preset minimum charging current c (c < b < a,), and the temperature of the device to be charged is still greater than the temperature D, the charging mode is exited or a next charging stage is entered, etc. In this way, the temperature of the device to be charged can be lowered in time, and it is avoided that the temperature of the device to be charged is too high due to continuous charging of the device to be charged, which affects the user experience. Furthermore, if the temperature is too high, it will cause some other unsafe factors, such as explosions.

The temperature E can be a maximum temperature value. If the temperature of the device to be charged exceeds the temperature E, the charging mode can be exited. The embodiment of the present disclosure sets a point of the maximum temperature E so that no matter which charging stage the device to be charged is currently in, and no matter how large the current charging current is, once the temperature of the device to be charged exceeds the temperature E, the charging mode is immediately exited. This can reduce security risks.

Alternatively, if the temperature of the device to be charged decreases to be in the range [A, C] again, the device to be charged returns to charging with the charging current a. This can further increase the charging speed. For example, a temperature point B is set in the temperature range [A, C]. If the temperature of the device to be charged decreases to less than the temperature B, the device to be charged returns to charging with the charging current a.

In the embodiment of the present disclosure, charging the device to be charged may be a direct charging mode or a normal charging mode. The direct charging mode can be understood as an express charge mode. The two charging modes will be described in detail below.

During the charging process, the temperature of the device to be charged can be monitored in real time, and the charging current can be continuously adjusted according to the temperature status of the device to be charged, to determine a best charging current for the current charging stage. The best charging current is used to charge the device to be charged.

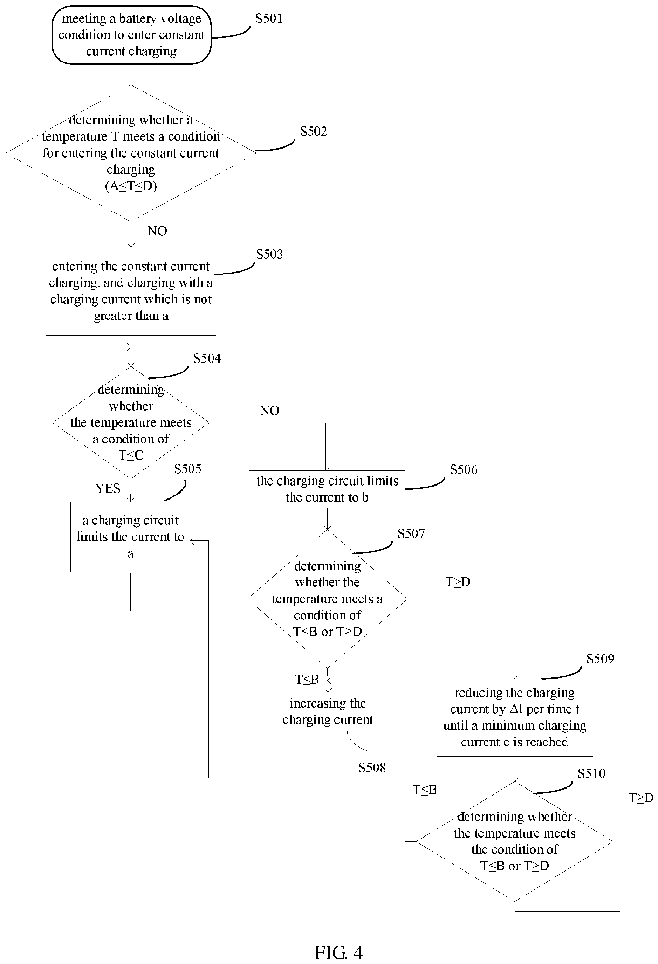

A specific process of the charging method of an embodiment of the present disclosure will be described in detail below with reference to FIG. 4.

In FIG. 4, taking the constant current charging stage as an example to illustrate a charging mechanism of the present disclosure.

In the embodiment of FIG. 4, five temperature point thresholds can be set, such as setting temperature points A, B, C, D, and E. The temperature points A, B, C, D, and E increase in order, i.e., A≤B≤C≤D≤E. In addition, a plurality of charging currents can be set, such as charging current a, b, and c. The charging current a, b, and c decrease in order, i.e., a≥b≥c.

In a step S501, if the voltage of the battery meets the condition, the battery enters the constant current charging stage. Before charging the battery with the constant current, the voltage of the battery can be detected first. After the battery voltage meets the condition of constant current charging, the battery then enters the constant current charging stage.

In a step S502, the temperature of the device to be charged is detected to determine whether the temperature of the device to be charged can meet the condition for entering the constant current charging. For example, if a temperature T of the device to be charged meets a condition of A≤T≤D, it is determined that the temperature of the device to be charged meets the constant current charging condition.

In a step S503, after determining that the temperature and voltage of the device to be charged meet the conditions for entering the constant current charging, the device to be charged can be charged with a charging current which is not greater than a.

In a step S504, it is determined again whether the temperature T of the device to be charged meets a condition of T≤C. For example, it can be further determined whether the temperature T meets a condition of A≤T≤C, or meets a condition of C≤T≤D.

In a step S505, if T≤C, the device to be charged can be charged with the charging current a. If the temperature of the device to be charged is low, the device can be charged with the maximum charging current. Alternatively, this step can also be that, if T≤C, the maximum charging current used for charging the device to be charged is the charging current a. In other words, the charging current a is a maximum limit current.

In a step S506, if T≥C, the device to be charged can be charged with the charging current b. Charging with the charging current b can also be understood as charging with a charging current with the maximum charging current of b. Alternatively, this step can also be that, if T≥C, the maximum charging current used for charging the device to be charged is the charging current b. In other words, the charging current b is a maximum limit current.

In a step S507, after charging with the charging current b, the temperature of the device to be charged can also be detected in real time. Furthermore, it can be detected whether the temperature T of the device to be charged is decreasing or increasing. For example, it is determined that whether T≤B or T≥D.

In a step S508, if T≤B, the charging current can be increased. If T≤B, it means that the temperature of the device to be charged decreases when the charging current b is used. The amount of heat generated by the device to be charged is less than the amount of the heat dissipation. At this time, the charging current can be increased appropriately to increase the charging speed. This will not cause the temperature of the device to be charged to rise rapidly, and can improve the user experience.

In a step S509, if T≥D, the charging current can be decreased. If T≥D, it means that when charging with the charging current b, the temperature of device to be charged continuously increases, and the amount of heat generated by the device to be charged is equal to the amount of the heat dissipation. If the device is continuously charged with the charging current b, it may cause safety risks. The charging current needs to be reduced to ensure safety.

The method of reducing the charging current can adopt the method of gradually reducing the current described above. The charging current is reduced by ΔI per time t.

In a step S510, in the process of reducing the charging current, the temperature of the device to be charged can be monitored in real time. It is determined that whether the temperature of the device to be charged is decreasing or increasing. In a case of the temperature decreasing, it can be further determined whether the temperature T meets a condition of T≤B. In a case of temperature increasing, it can be continuously determined whether the temperature is still higher than the temperature D.

In the case of the temperature meets the condition of T≤B, the charging current can be increased, and the charging current a can be used for charging.

In the case of the temperature is still greater than the temperature D, the step S510 is repeated to gradually decrease the charging current until the charging current decreases to less than the charging current c, or the temperature of the device to be charged is higher than the temperature E. If the charging current decreases to less than the charging current c, or the temperature of the device to be charged is higher than the temperature E, the constant current charging mode can be exited.

Alternatively, in the above step, in any case, as long as the temperature of the device to be charged exceeds the temperature E, the constant current charging stage can be exited. This can ensure the safety of the device to be charged.

In FIG 4, only five temperature points and three charging currents are used as an example for description. The embodiment of the present disclosure is not limited to this. The embodiments of the present disclosure can also set more or less temperature points and charging currents to optimize the charging process of the device to be charged.

The embodiment of the present disclosure does not specifically limit the manner of adjusting the charging current.

For example, the adjustment of the charging current can be realized by a wireless charging device. Temperature feedback information can be sent to the wireless charging device to cause the wireless charging device to adjust a transmitting power of a wireless charging signal. For another example, the adjustment of the charging current can be realized by a power supply. The temperature feedback information can be sent to the power supply to cause the power supply to adjust its output power. The temperature feedback information is feedback information corresponding to the temperature of the device to be charged.

The charging method of the embodiment of the present disclosure can be applied to a charging device. The charging device may be, for example, a device to be charged. Alternatively, the charging device is a chip with a wireless charging signal receiving function. The charging device may include a communication control circuit. When the temperature of the device to be charged is greater than the first threshold value, the communication control circuit may send the temperature feedback information to the wireless charging device to cause the wireless charging device to reduce the current corresponding to the transmitting power of the wireless charging signal.

The current corresponding to the transmitting power of the wireless charging signal can be understood as an output voltage and/or an output current received and converted by the wireless receiving circuit from the wireless charging signal transmitted by the wireless transmitting circuit.

The temperature feedback information may include a difference between the temperature of the device to be charged and the first threshold value. After the wireless charging device receives the difference, it can reduce the current corresponding to the wireless charging signal. For example, a plurality of levels may be set for the transmitting power of the wireless charging device, and the current at every level may be ΔI. The wireless charging device can reduce the current by one level per time if the difference is received each time.

The temperature feedback information may include adjustment information. The adjustment information is configured to cause the wireless charging device to adjust the transmitting power of the wireless charging signal. For example, the adjustment information can be configured to cause the wireless charging device to increase or decrease the output current corresponding to the wireless charging signal. For example, if the temperature of the device to be charged exceeds the first threshold value, the adjustment information can be configured to cause the wireless charging device to reduce the output current corresponding to the wireless charging signal. When using the reduced current to charge the battery, if the temperature of the device to be charged drops below the second threshold value (for example, the temperature point B described above), the adjustment information can be configured to cause the wireless charging device to increase the output current corresponding to the wireless charging signal.

Similarly, if the temperature of the device to be charged is greater than the first threshold value, the communication control circuit can send the temperature feedback information to the power supply to cause the power supply to reduce its output current.

The temperature feedback information may include a difference between the temperature of the device to be charged and the first threshold value. After the power supply receives the difference, the output current of the power supply can be reduced. For example, a plurality of levels can be set for the output current of the power supply, and the current at every level can be ΔI. The power supply may reduce the current by one level if the difference is received each time.

The temperature feedback information may include adjustment information. The adjustment information is configured to cause the power supply to adjust its output current. For example, the adjustment information can be configured to cause the power supply to increase or decrease its output current. For example, if the temperature of the device to be charged exceeds the first threshold value, the adjustment information can be configured to cause the power supply to reduce its output current. When using the reduced current to charge the battery, if the temperature of the device to be charged drops below the second threshold value (for example, the temperature point B described above), the adjustment information can be configured to cause the power supply to increase its output current.

If the temperature of the device to be charged exceeds the second threshold value, the communication control circuit can also use the above-mentioned similar method to adjust the charging current. For the sake of brevity, it will not be repeated here.

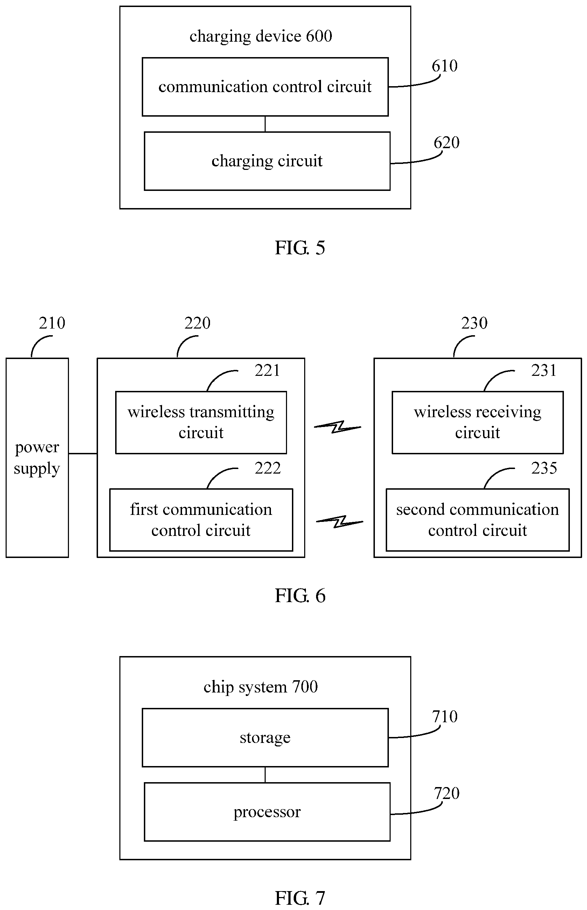

FIG. 5 is a schematic diagram of a charging device 600 of an embodiment of the present disclosure. The device embodiment and the method embodiment correspond to each other. Therefore, parts that are not described can refer to the foregoing method embodiments. The charging device 600 includes a communication control circuit 610 and a charging circuit 620. The charging device in the embodiment of the present disclosure may refer to a device to be charged. Alternatively, the charging device may only include a chip for receiving wireless charging signals.

The communication control circuit 610 is configured to determine a battery entering a constant current charging stage if a voltage of the battery and a temperature meet a preset condition, configured to detect the temperature of the device to be charged, and configured to reduce a charging current by ΔI if the temperature of the device to be charged is greater than a first threshold value.

The charging circuit 620 is configured to charge the battery with the charging current reduced by ΔI.

Alternatively, if the temperature of the device to be charged is greater than the first threshold value, the communication control circuit 610 is configured to reduce the charging current by ΔI per time t until the temperature of the device to be charged is less than the first threshold value.

Alternatively, if the temperature of the device to be charged is greater than the first threshold value, the communication control circuit is configured to reduce the charging current by ΔI per time t until a reduced charging current is less than a preset minimum charging current.

Alternatively, the communication control circuit 610 is further configured to terminate charging if the reduced charging current is less than the preset minimum charging current and the temperature of the device to be charged is greater than the first threshold value.

Alternatively, if the temperature of the device to be charged is less than a second threshold value, the communication control circuit is further configured to charge the battery with a first charging current. If the temperature of the device to be charged is greater than the second threshold value and less than the first threshold value, the communication control circuit is further configured to charge the battery with a second charging current. The second threshold value is less than the first threshold value, and the first charging current is greater than the second charging current.

Alternatively, in a process of charging the battery with the second charging current, the communication control circuit is further configured to change to charging the battery with the first charging current if the temperature of the device to be charged decreases below the second threshold value.

Alternatively, in a process of charging the battery with the charging current reduced by ΔI, the communication control circuit is further configured to change to charging the battery with the first charging current if the temperature of the device to be charged decreases below the second threshold value.

Alternatively, the communication control circuit is further configured to terminate charging if the temperature of the device to be charged is greater than a third threshold value. The third threshold value is greater than the first threshold value.

Alternatively, if the temperature of the device to be charged is greater than the first threshold value, the communication control circuit is further configured to transmit temperature feedback information to a wireless charging device to cause the wireless charging device to reduce an output current corresponding to a wireless charging signal by ΔI. The temperature feedback information is feedback information corresponding to the temperature of the device to be charged.

Alternatively, the temperature feedback information includes adjustment information, and the adjustment information is configured to cause the wireless charging device to reduce the output current corresponding to the wireless charging signal.

Alternatively, if the temperature of the device to be charged is greater than the first threshold value, the communication control circuit is further configured to transmit temperature feedback information to a power supply to cause the power supply to reduce an output current of the power supply by ΔI. The temperature feedback information is feedback information corresponding to the temperature of the device to be charged.

Alternatively, the temperature feedback information includes adjustment information, and the adjustment information is configured to cause the power supply to reduce the output current of the power supply.

Alternatively, the temperature feedback information is configured to indicate a difference between the temperature of the device to be charged and the first threshold value.

FIG. 6 is a schematic diagram of a wireless charging system of an embodiment of the present disclosure. A charging process of the embodiment of the present disclosure will be described in detail below with reference to FIG. 6.

A wireless receiving circuit 231 can receive a wireless charging signal transmitted by a wireless transmitting circuit 221 in a wireless charging device 220, and convert the wireless charging signal into an output voltage and an output current of the wireless receiving circuit for charging a battery.

A second communication control circuit 235 can be configured to communicate with a first communication control circuit 222 to instruct the first communication control circuit 222 to adjust a transmitting power of the wireless transmitting circuit 221.

The second communication control circuit 235 can be configured to detect or monitor a temperature of a device to be charged in real time. There are many ways for the second communication control circuit 235 to detect or monitor the temperature of the device to be charged. For example, the temperature of the device to be charged can be detected by a detection circuit, or the temperature of the device to be charged can be detected by other methods. The embodiments of the present disclosure are not limited to this.

The second communication control circuit 235 can also be configured to detect a voltage of the battery. If the voltage of the battery and the temperature meet a preset condition, instruction information can be sent to the first communication control circuit 222 to cause the first communication control circuit 222 to adjust the transmitting power of the wireless transmitting circuit 221 to charge the battery with a constant current.

After entering the constant current charging, if the second communication control circuit 235 detects that the temperature of the device to be charged is in the range [A, C] shown in FIG. 5, it can send indication information to the first communication control circuit 222 to cause the wireless transmitting circuit to transmit a wireless charging signal according to a maximum charging current, so that the charging circuit can charge the battery with the maximum charging current.

In the process of charging with the maximum charging current a, the second communication control circuit 235 can detect the temperature of the device to be charged in real time. If the temperature of the device to be charged exceeds a temperature point C, temperature feedback information can be sent to the first communication control circuit to cause a current corresponding to the wireless charging signal transmitted by the wireless transmitting circuit to reduce, so that the charging circuit can charge the battery with a charging current b. For example, the wireless charging device 220 may set a plurality of levels for an output current corresponding to the transmitting power of the wireless transmitting circuit. After receiving the temperature feedback information sent by the second communication control circuit, the output current can be lowered by one level. In this way, the output current corresponding to the transmitting power can be reduced to close the charging current b through one adjustment, which can save a loop response time.

In the process of charging the battery with the charging current b, the second communication control circuit 235 can detect continuously the temperature of the device to be charged. If the temperature of the device to be charged decreases to less than a temperature point B, the temperature feedback information can be sent to the first communication control circuit to cause the output current corresponding to the wireless charging signal transmitted by the wireless transmitting circuit to increase, so that the charging circuit can charge the battery with the charging current a again. For example, the wireless charging device may set a plurality of levels for the output current corresponding to the transmitting power of the wireless transmitting circuit. After receiving the temperature feedback information sent by the second communication control circuit, the output current can be increased by one level. In this way, the output current corresponding to the transmitting power can be increased to close the charging current a through one adjustment, which can save the loop response time.

In the process of charging the battery with the charging current b, if the second communication control circuit detects that the temperature of the device to be charged rises to greater than or equal to a temperature point D, it can send the temperature feedback information to the first communication control circuit to instruct the wireless transmitting circuit to reduce the output current corresponding to the transmitted wireless charging signal by ΔI. The second communication control circuit may also instruct the wireless transmitting circuit to reduce the charging current by ΔI per time t. The wireless charging device can set a plurality of levels for the charging current. The current is reduced one level per time t. If the temperature of the device to be charged is less than the temperature point D, the second communication control circuit can instruct the wireless transmitting circuit to maintain the current charging current for charging the battery. If the charging current decreases below a charging current c, the second communication control circuit may instruct the wireless transmitting circuit to stop charging the battery.

In the process of reducing the charging current by ΔI to charge the battery, if the second communication control circuit detects that the temperature of the device to be charged is less than the temperature point B, it can instruct the wireless transmitting circuit to charge the battery with the charging current a.

In any of the foregoing charging stages, if the second communication control circuit detects that the temperature of the device to be charged exceeds a temperature point E, the second communication control circuit may instruct the wireless transmitting circuit to stop charging the battery to ensure the safety of the battery.

In the embodiment of the present disclosure, the method of adjusting the output power of the wireless transmitting circuit 221 may include any one of the following two methods and their combination.

(1) When an input voltage of the wireless transmitting circuit 221 is fixed, the output power of the wireless transmitting circuit 221 can be adjusted by adjusting parameters, such as a tuning frequency of a resonance circuit and/or a duty cycle of a switching transistor of an inverter circuit, etc.

(2) By adjusting the output voltage of the power supply 210 (i.e., an input voltage of the wireless charging device 230), the output power of the wireless transmitting circuit 221 is adjusted.

Similar to the above process, the adjustment of charging current can also be realized by the power supply. The second communication control circuit can communicate with the power supply to instruct the power supply to adjust its output current.

When the second communication control circuit detects that the voltage of the battery and the temperature meet the preset condition, it can send indication information to the power supply to cause the power supply to adjust the output power of the power supply to charge the battery with the constant current.

If the temperature of the device to be charged is in a range [A, C], the second communication control circuit can instruct the power supply to adjust its output current, so that the charging circuit can charge the battery according to the maximum charging current a. If the temperature of the device to be charged is in a range [C, D], the second communication control circuit can instruct the power supply to adjust its output current, so that the charging circuit can charge the battery according to the charging current b.

If the temperature of the device to be charged exceeds the temperature point D, the second communication control circuit can send the temperature feedback information to the power supply to cause the power supply to reduce the output current by ΔI. The power supply can set a plurality of levels for the output currents. The current reduces one level per time t. If the temperature of the device to be charged is less than the temperature point D, the second communication control circuit can instruct the power supply to maintain the current charging current for charging the battery. If the charging current decreases below the charging current c, the second communication control circuit can instruct the power supply to stop charging the battery.

In the process of reducing the charging current by ΔI to charge the battery, if the second communication control circuit detects that the temperature of the device to be charged is less than the temperature point B, it can instruct the power supply to charge the battery with the charging current a.

In any of the above charging stages, if the second communication control circuit detects that the temperature of the device to be charged exceeds the temperature point E, the second communication control circuit can instruct the power supply to stop charging the battery to ensure the safety of the battery.

The solution described in FIG. 6 can be combined with the solution described in FIG. 4, for example, the setting method of each temperature point and the charging process described in FIG. 4 are also applicable to the solution described in FIG. 6.

An embodiment of the present disclosure also provides a device to be charged, and the device to be charged may include a battery and a charging device in any of the implementation manners described above.

As shown in FIG. 7, an embodiment of the present disclosure also provides a chip system 700. The chip system 700 includes a processor 710 and a storage 720. The storage 720 is configured to store instructions. The processor 710 is configured to execute the instructions stored in the storage 720.

It should be understood that the charging device shown in FIG. 6 or the chip system shown in FIG. 7 can be used to perform related operations or processes in the foregoing method embodiments. Also, operations and/or functions of each circuit or unit in the charging device shown in FIG. 6 or the chip system shown in FIG. 7 are used to implement the corresponding processes in the foregoing method embodiments. For brevity, details are not described herein again.

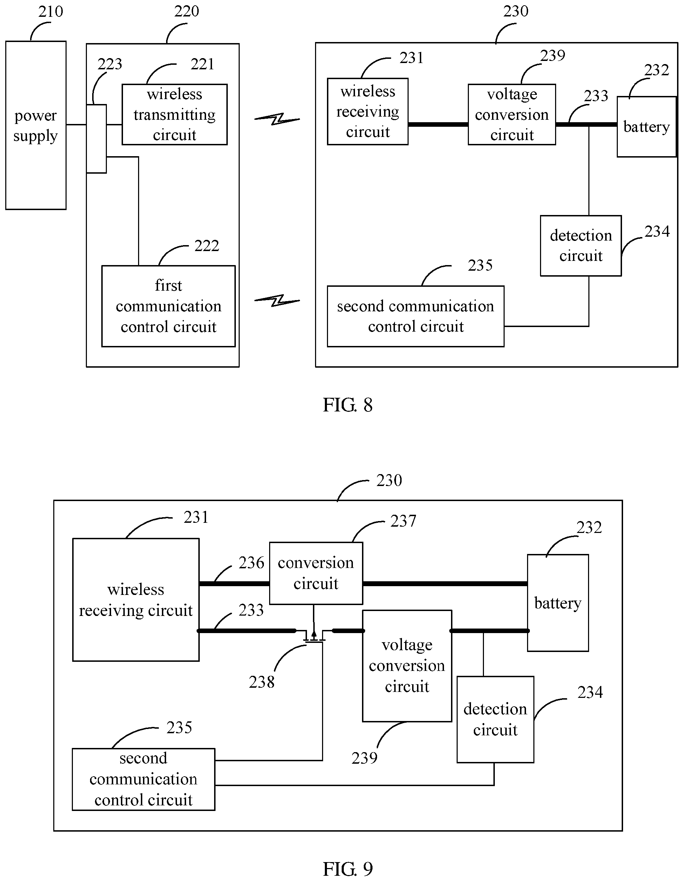

FIG. 8 is a schematic diagram of another wireless charging system of an embodiment of the present disclosure. As shown in FIG. 8, the wireless charging device 220 may further include a charging interface 223, and the charging interface 223 may be configured to connect to an external power supply 210. The wireless transmitting circuit 221 can also be configured to generate a wireless charging signal according to an output voltage and an output current of the power supply 210.

The present disclosure does not specifically limit a type of the charging interface 223. Alternatively, in some embodiments, the charging interface 223 may be a universal serial bus (USB) interface. The USB interface can be, for example, a USB 2.0 interface, a micro USB interface, and a USB TYPE-C interface. Alternatively, in other embodiments, the charging interface 223 may also be a lightning interface, or any other type of parallel port and/or serial port that can be used for charging.

The embodiment of the present disclosure does not specifically limit a communication manner between the first communication control circuit 222 and the power supply 210. As an example, the first communication control circuit 222 may be connected to the power supply 210 through a communication interface other than the charging interface, and communicate with the power supply 210 through the communication interface. As another example, the first communication control circuit 222 may communicate with the power supply 210 in a wireless manner. For example, the first communication control circuit 222 may perform near field communication (NFC) with the power supply 210. As another example, the first communication control circuit 222 may communicate with the power supply 210 through the charging interface 223, without providing an additional communication interface or other wireless communication modules. Is simplifies the implementation of the wireless charging device 220. For example, the charging interface 223 is a USB interface, and the first communication control circuit 222 may communicate with the power supply 210 based on data lines (such as, D+ and/or D- lines) in the USB interface. For another example, the charging interface 223 may be a USB interface (such as, a USB TYPE-C interface) supporting a power delivery (PD) communication protocol. The first communication control circuit 222 may communicate with the power supply 210 based on the PD communication protocol.

The charging method shown in FIG. 8 is similar to the above description. In order to avoid repetition, it will not be repeated here. It should be noted that the detection of the temperature of the device to be charged by the second communication control circuit 235 can be implemented by a detection circuit 234 shown in FIG. 8.

The technical solutions of the embodiments of the present disclosure may be applied in a wireless charging process, or may also be applied in a wired charging process. Taking wireless charging as an example, the technical solutions of the present disclosure will be described in detail below.

Alternatively, in some embodiments, the wireless charging device 220 may support a first wireless charging mode and a second wireless charging mode. A speed of the wireless charging device 220 to charge the device to be charged in the first wireless charging mode is faster than ae speed of the wireless charging device 220 to charge to the device to be charged in the second wireless charging mode. In other words, in comparison with the wireless charging device 220 working in the second wireless charging mode, the wireless charging device 220 working in the first wireless charging mode takes less time to fill the battery in the device to be charged with the same capacity.

The process of charging the device to be charged described above may be charging in the first charging mode, or charging in the second charging mode.

A second wireless charging mode may be a so-called normal wireless charging mode, for example, may be a traditional wireless charging mode based on the QI standard, the PMA standard, or the A4WP standard. A first wireless charging mode may be an express wireless charging mode. The normal wireless charging mode may refer to a wireless charging mode in which a transmitting power of the wireless charging device 220 is small (usually less than 15W, and the commonly used transmitting power is 5W or 10W). In the normal wireless charging mode, it usually takes several hours to fully charge a large-capacity battery (such as a 3000 mAh battery). In the express wireless charging mode, the transmitting power of the wireless charging device 220 is relatively large (usually greater than or equal to 15W). In comparison with the normal wireless charging mode, a charging time required for the wireless charging device 220 to fully charge the battery of the same capacity in the express wireless charging mode can be significantly shortened, and a charging speed is faster.

Referring to FIG. 9, in an embodiment of the present disclosure, the device to be charged 230 further includes a second charging channel 236. The second charging channel 236 may be a wire. A conversion circuit 237 may be provided on the second charging channel 236 to perform voltage control on a direct current output by the wireless receiving circuit 231 to obtain the output voltage and the output current of the second charging channel 236 to charge the battery 232.

In one embodiment, the conversion circuit 237 can be used in a step-down circuit and configured to output an electric energy of a constant current and/or a constant voltage. In other words, the conversion circuit 237 can be configured to perform a constant voltage control and/or a constant current control in the battery charging process.

When the battery 232 is charged through the second charging channel 236, the wireless transmitting circuit 221 can use a constant transmitting power to transmit an electromagnetic signal. After the wireless receiving circuit 231 receives the electromagnetic signal, the conversion circuit 237 processes the voltage and current to meet the charging requirements of the battery 232 and inputs them to the battery 232 to realize the charging of the battery 232. It should be understood that, in some embodiments, the constant transmitting power does not necessarily mean that the transmitting power remains completely unchanged, and it can change within a certain range. For example, the transmitting power of 7.5W can increase and decrease by 0.5W.

In this embodiment, the second communication control circuit 235 is also configured to communicate with the first communication control circuit according to the detected temperature of the device to be charged 230. For example, the second communication control circuit 235 may send the temperature of the device to be charged 230 to the wireless charging device 220 in a form of a data packet.

In an embodiment, when the battery 232 is charged through the second charging channel 236, the wireless charging device 220 and the device to be charged 230 can perform wireless charging in accordance with the Qi standard. Thus, a data signal including the above temperature information can be coupled to a coil of the wireless receiving circuit 231 to be transmit to a coil of the wireless transmitting circuit 221 by means of signal modulation, and then it is transmitted to the first communication control circuit 222. The first communication control circuit 222 adjusts transmission parameters of the wireless transmitting circuit 221 according to the temperature information, such as an operating frequency of a transmitting coil, etc.

Alternatively, in some embodiments, the communication between the first communication control circuit 222 and the second communication control circuit 235 may use a wireless communication method, such as a bluetooth communication, a wireless fidelity (Wi-Fi) communication, a backscatter modulation method (or a power load modulation method) communication, a near-field wireless communication based on high carrier frequency, an optical communication, an ultrasonic communication, an ultra-wideband communication, a mobile communication, etc.

Alternatively, the communication between the first communication control circuit 222 and the second communication control circuit 235 may also be performed in a wired communication manner of a data interface.

Control functions in the first communication control circuit 222 and the second communication control circuit 235 may be implemented by, for example, a micro control unit (MCU). The first communication control circuit 222 and the second communication control circuit 235 can be used to control the charging current of the device to be charged.

In the embodiment of the present disclosure, the charging method for charging the battery 232 through the first charging channel 233 is the first wireless charging mode, and the charging method for charging the battery 232 through the second charging channel 236 is the second wireless charging mode. The wireless charging device and the device to be charged can determine whether to use the first wireless charging mode or the second wireless charging mode to charge the battery 232 through a handshake communication.

In the embodiment of the present disclosure, in the wireless charging device, when the device to be charged is charged through the first wireless charging mode, a maximum transmitting power of the wireless transmitting circuit 221 may be a first transmitting power value. When the device to be charged is charged through the second wireless charging mode, the maximum transmitting power of the wireless transmitting circuit 221 may be a second transmitting power value. The first transmitting power value is greater than the second transmitting power value. Therefore, using the first wireless charging mode to charge the device to be charged is faster than the second wireless charging mode.

Alternatively, the second communication control circuit 235 may also be configured to control a switching between the first charging channel 233 and the second charging channel 236. For example, as shown in FIG. 9, a switch 238 may be provided on the first charging channel 233. The second communication control circuit 235 can control the switching between the first charging channel 233 and the second charging channel 236 by controlling the switch 238 to be turned on and off. As mentioned above, in some embodiments, the wireless charging device 220 may include the first wireless charging mode and the second wireless charging mode. A charging speed of the wireless charging device 220 to the device to be charged 230 in the first wireless charging mode is faster than a charging speed of the wireless charging device 220 to the device to be charged 230 in the second wireless charging mode. When the wireless charging device 220 uses the first wireless charging mode to charge the battery in the device to be charged 230, the device to be charged 230 can enable the first charging channel 233. When the wireless charging device 220 uses the second wireless charging mode to charge the battery in the device to be charged 230, the device to be charged 230 can enable the second charging channel 236.

In the device to be charged, the second communication control circuit 235 can switch between the first charging channel 233 and the second charging channel 236 according to the charging mode. When the first wireless charging mode is adopted, the second communication control circuit 235 controls a voltage conversion circuit 239 on the first charging channel 233 to work. When the second wireless charging mode is adopted, the second communication control circuit 235 controls a conversion circuit 237 on the second charging channel 236 to work.

Alternatively, the wireless charging device 220 may communicate with the device to be charged 230 to negotiate a charging mode between the wireless charging device 220 and the device to be charged 230.

In addition to the communication content described above, many other communication information can be exchanged between the first communication control circuit 222 in the wireless charging device 220 and the second communication control circuit 235 in the device to be charged 230. In some embodiments, the first communication control circuit 222 and the second communication control circuit 235 can not only be configured to exchange the temperature information of the battery 232, but also be configured to exchange information (such as instruction information for entering over-voltage protection or over-current protection) and power transmission efficiency information (the power transmission efficiency information can be used to indicate a power transmission efficiency between the wireless transmitting circuit 221 and the wireless receiving circuit 231).

Alternatively, the communication between the second communication control circuit 235 and the first communication control circuit 222 may be one-way communication or two-way communication, which is not specifically limited in the embodiment of the present disclosure.

In the embodiment of the present disclosure, the functions of the second communication control circuit can be implemented by an application processor of the device to be charged 230. Thus, a hardware cost can be saved. Alternatively, it can also be implemented by an independent control chip, which can improve reliability of control.

Alternatively, the embodiment of the present disclosure may integrate the wireless receiving circuit 232 and the voltage conversion circuit 239 in a same wireless charging chip, which can improve an integration of the device to be charged and simplify the implementation of the device to be charged. For example, a function of a traditional wireless charging chip can be expanded to support a charging management function.

The battery 232 in the wireless charging system of the embodiment of the present disclosure may include one battery cell, or may include N of battery cells connected in series (N is a positive integer greater than 1). Taking N=2 as an example, the battery 232 may include a first battery cell and a second battery cell, and the first battery cell and the second battery cell are connected in series with each other. The description will be given by taking an example in which a charging power is equal to 20W and a charging voltage of a single battery cell is equal to 5V. In order to meet charging voltage requirements of two battery cells connected in series, the output voltage and the output current of the first charging channel 233 need to be maintained at 10V and 2A. In this way, the wireless transmitting circuit generates an electromagnetic signal based on 10V/2A. Correspondingly, the wireless receiving circuit converts the electromagnetic signal into an output voltage and an output current of 10V and 2A. As the current is reduced from 4A to 2A, a generated heat during a power transmission process will be reduced accordingly. Therefore, the embodiments of the present disclosure may also use a plurality of battery cells connected in series to reduce the heat generated by the wireless transmitting circuit 221 and the wireless receiving circuit 231.

The above description is based on N=2 as an example. In fact, a value of N can be 3, or a positive integer above 3. The more battery cells that are connected in series, the less heat generated by the electric energy passing through the wireless transmitting circuit 221 and the wireless receiving circuit 231.

In an embodiment of the present disclosure, in order to ensure the charging speed and further reduce the heat generation of the device to be charged 230, the embodiment of the present disclosure further changes a battery structure in the device to be charged 230. A plurality of battery cells connected in series are added. In comparison with a single battery cell solution, to achieve the same charging speed, a charging current required by the plurality of battery cells is 1/N of a charging current required by a single battery cell (N is a number of battery cells connected in series within the device to be charged 230). In other words, under a premise of ensuring the same charging speed, the embodiment of the present disclosure can greatly reduce the charging current, thereby further reducing the amount of heat generated by the device to be charged 230 during the charging process.

The plurality of battery cells in one embodiment of the present disclosure may be the battery cells with the same or similar specifications and parameters. The battery cells with the same or similar specifications are convenient for unified management. Also, selecting the battery cells with the same or similar specifications and parameters can improve an overall performance and a lifespan of the plurality of battery cells.

During the charging process, the electric energy output by the first charging channel or the second charging channel can be used to charge the plurality of battery cells connected in series. During a power supply process, a step-down circuit can be configured to step down the voltage of the plurality of battery cells and then supply power to a system of the device to be charged 230. Alternatively, a single battery cell can also be configured for system power supply. In addition, during the charging process, if it is necessary to supply power to the system, it can directly supply power to the system through a path of a charging management circuit.

In order to maintain a balance of the amount of electricity of the plurality of battery cells, during the charging and discharging process, the amount of electricity the plurality of battery cells can be balanced by a balance circuit. There are many ways to implement the balance circuit. For example, a load can be connected to both ends of a battery cell to consume the power of the battery cell, so that the battery cell has the same power as other battery cells, and the voltage of each battery cell is consistent. Alternatively, a battery cell with a high battery capacity can be used to charge a battery cell with a low battery capacity until the voltages of the battery cells are consistent.

In the foregoing embodiments, it may be implemented in whole or in part by a software, a hardware, a firmware, or any other combination. When implemented by the software, it can be implemented in a form of a computer program product in whole or in part. The computer program product includes one or more computer instructions. When the computer program instructions are loaded and executed on a computer, processes or functions described in the embodiments of the present disclosure are generated in whole or in part. The computer may be a general-purpose computer, a special-purpose computer, a computer network, or other programmable devices. The computer instructions may be stored in a computer-readable storage medium, or transmitted from one computer-readable storage medium to another computer-readable storage medium. For example, the computer instructions can be transmitted from one website site, computer, server, or data center to another website site, computer, server, or data center through a wired manner (such as, a coaxial cable, an optical fiber, a digital subscriber line (DSL)) or a wireless manner (such as, an infrared, wireless, microwaves, etc.) The computer-readable storage medium may be any available medium that can be accessed by a computer or a data storage device (such as, a server or a data center) integrated with one or more available medium. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

A person of ordinary skill in the art may know that, in combination with the examples described in the embodiments disclosed herein, units and algorithm steps can be implemented by an electronic hardware or a combination of a computer software and the electronic hardware. Whether these functions are performed by the hardware or the software depends on a specific application and design constraints of the technical solutions. Professionals and technicians can use different methods for each specific application to realize the described functions, but this realization should not be considered beyond a scope of the present disclosure.

In the several embodiments provided in the present disclosure, it should be understood that the disclosed system, device, and method may be implemented in other ways. For example, the device embodiments described above are only illustrative. For example, a distinction between units is only a logical function distinction. There can be other ways of distinguishing in actual implementation. For example, a plurality of units or components can be combined or integrated into another system, or some features can be omitted or not implemented. Furthermore, the displayed or discussed mutual coupling or direct coupling or communication connection may be indirect coupling or communication connection through some interfaces, devices, or units, and may be in electrical, mechanical, or other forms.

The units described as separate components may or may not be physically separate. The components displayed as units may or may not be physical units. They can be disposed in one place, or they can be arranged to a plurality of network units. Some or all of the units may be selected according to actual needs to achieve the objectives of the solutions of the embodiments.

In addition, each functional unit in each embodiment of the present disclosure may be integrated into one processing unit, or each unit may form alone physically, or two or more units may be integrated into one unit.

The above are only specific implementations of the present disclosure. However, the scope protection of the present disclosure is not limited to this. Any person skilled in the art can easily think of changes or replacements within the technical scope disclosed in the present disclosure, and they should belong to the present disclosure. Therefore, the protection scope of the present disclosure should be subject to the protection scope of appended claims.

## Claims

1. A charging method, **characterized in** comprising:
determining a battery entering a constant current charging stage if a voltage of the battery and a temperature of a device to be charged meet a preset condition;
detecting the temperature of the device to be charged;
reducing a charging current by ΔI if the temperature of the device to be charged is greater than a first threshold value; and
charging the device to be charged with the charging current reduced by ΔI.

2. The charging method according to claim 1, **characterized in that** the step of reducing the charging current by ΔI if the temperature of the device to be charged is greater than the first threshold value comprises:
if the temperature of the device to be charged is greater than the first threshold value, reducing the charging current by ΔI per time t until the temperature of the device to be charged is less than the first threshold value.

3. The charging method according to claim 1, **characterized in that** the step of reducing the charging current by ΔI if the temperature of the device to be charged is greater than the first threshold value comprises:
if the temperature of the device to be charged is greater than the first threshold value, reducing the charging current by ΔI per time t until a reduced charging current is less than a preset minimum charging current.

4. The charging method according to claim 3, **characterized in that** the charging method further comprises:
terminating charging if the reduced charging current is less than the preset minimum charging current and the temperature of the device to be charged is greater than the first threshold value.

5. The charging method according to any one of claim 1 to claim 4, **characterized in that** before the step of reducing the charging current by ΔI if the temperature of the device to be charged is greater than the first threshold value, the charging method further comprises:
charging the battery with a first charging current if the temperature of the device to be charged is less than a second threshold value;
charging the battery with a second charging current if the temperature of the device to be charged is greater than the second threshold value and less than the first threshold value, wherein the second threshold value is less than the first threshold value, and the first charging current is greater than the second charging current.

6. The charging method according to claim 5, **characterized in that** the charging method further comprises:
in the step of charging the battery with the second charging current, changing to charging the battery with the first charging current if the temperature of the device to be charged decreases below the second threshold value.

7. The charging method according to claim 5 or claim 6, **characterized in that** the charging method further comprises:
in the step of charging the battery with the charging current reduced by ΔI, changing to charging the battery with the first charging current if the temperature of the device to be charged decreases below the second threshold value.

8. The charging method according to any one of claim 1 to claim 7, **characterized in that** the charging method further comprises:
terminating charging if the temperature of the device to be charged is greater than a third threshold value, wherein the third threshold value is greater than the first threshold value.

9. The charging method according to any one of claim 1 to claim 8, **characterized in that** the step of reducing the charging current by ΔI if the temperature of the device to be charged is greater than the first threshold value comprises:
transmitting temperature feedback information to a wireless charging device to cause the wireless charging device to reduce a current corresponding to a wireless charging signal by ΔI if the temperature of the device to be charged is greater than the first threshold value, wherein the temperature feedback information is feedback information corresponding to the temperature of the device to be charged.

10. The charging method according to claim 9, **characterized in that** the temperature feedback information comprises adjustment information, and the adjustment information is configured to cause the wireless charging device to reduce an output current corresponding to the wireless charging signal.

11. The charging method according to any one of claim 1 to claim 8, **characterized in that** the step of reducing the charging current by ΔI if the temperature of the device to be charged is greater than the first threshold value comprises:
transmitting temperature feedback information to a power supply to cause the power supply to reduce an output current of the power supply by ΔI if the temperature of the device to be charged is greater than the first threshold value, wherein the temperature feedback information is feedback information corresponding to the temperature of the device to be charged.

12. The charging method according to claim 11, **characterized in that** the temperature feedback information comprises adjustment information, and the adjustment information is configured to cause the power supply to reduce the output current of the power supply.

13. The charging method according to any one of claim 9 to claim 12, **characterized in that** temperature feedback information is configured to indicate a difference between the temperature of the device to be charged and the first threshold value.

14. A charging device, **characterized in** comprising:
a communication control circuit configured to determine a battery entering a constant current charging stage if a voltage of the battery and a temperature meet a preset condition, configured to detect the temperature of a device to be charged, and configured to reduce a charging current by ΔI if the temperature of the device to be charged is greater than a first threshold value; and
a charging circuit configured to charge the battery with the charging current reduced by ΔI.

15. The charging device according to claim 14, **characterized in that** if the temperature of the device to be charged is greater than the first threshold value, the communication control circuit is configured to reduce the charging current by ΔI per time t until the temperature of the device to be charged is less than the first threshold value.

16. The charging device according to claim 14, **characterized in that** if the temperature of the device to be charged is greater than the first threshold value, the communication control circuit is configured to reduce the charging current by ΔI per time t until a reduced charging current is less than a preset minimum charging current.

17. The charging device according to claim 16, **characterized in that** the communication control circuit is further configured to terminate charging if the reduced charging current is less than the preset minimum charging current and the temperature of the device to be charged is greater than the first threshold value.

18. The charging device according to any one of claim 14 to claim 17, **characterized in that** if the temperature of the device to be charged is less than a second threshold value, the communication control circuit is further configured to charge the battery with a first charging current;
if the temperature of the device to be charged is greater than the second threshold value and less than the first threshold value, the communication control circuit is further configured to charge the battery with a second charging current;
wherein the second threshold value is less than the first threshold value, and the first charging current is greater than the second charging current.

19. The charging device according to claim 18, **characterized in that** in a process of charging the battery with the second charging current, the communication control circuit is further configured to change to charging the battery with the first charging current if the temperature of the device to be charged decreases below the second threshold value.

20. The charging device according to claim 18 or claim 19, **characterized in that** in a process of charging the battery with the charging current reduced by ΔI, the communication control circuit is further configured to change to charging the battery with the first charging current if the temperature of the device to be charged decreases below the second threshold value.

21. The charging device according to any one of claim 14 to claim 20, **characterized in that** the communication control circuit is further configured to terminate charging if the temperature of the device to be charged is greater than a third threshold value, wherein the third threshold value is greater than the first threshold value.

22. The charging device according to any one of claim 14 to claim 21, **characterized in that** if the temperature of the device to be charged is greater than the first threshold value, the communication control circuit is further configured to transmit temperature feedback information to a wireless charging device to cause the wireless charging device to reduce an output current corresponding to a wireless charging signal by ΔI, wherein the temperature feedback information is feedback information corresponding to the temperature of the device to be charged.

23. The charging device according to claim 22, **characterized in that** the temperature feedback information comprises adjustment information, and the adjustment information is configured to cause the wireless charging device to reduce the output current corresponding to the wireless charging signal.

24. The charging device according to any one of claim 14 to claim 21, **characterized in that** if the temperature of the device to be charged is greater than the first threshold value, the communication control circuit is further configured to transmit temperature feedback information to a power supply to cause the power supply to reduce an output current of the power supply by ΔI, wherein the temperature feedback information is feedback information corresponding to the temperature of the device to be charged.

25. The charging device according to claim 24, **characterized in that** the temperature feedback information comprises adjustment information, and the adjustment information is configured to cause the power supply to reduce the output current of the power supply.

26. The charging device according to any one of claim 22 to claim 25, **characterized in that** temperature feedback information is configured to indicate a difference between the temperature of the device to be charged and the first threshold value.

27. A storage medium, **characterized in** comprising instructions which, when executed by a processor, cause the processor to perform the method according to any one of claims 1-13.

28. A chip system, **characterized in** comprising:
a storage configured to store instructions; and
a processor configured to execute the instructions stored in the storage such that a charging device installed with the chip system executes the method according to any one of claims 1-13.
